# EUROPEAN PATENT APPLICATION

(11) **EP 4 120 213 A1**
(43) Date of publication of application: **18.01.2023**
(21) Application number: 22178610.6
(22) Date of filing: 13.06.2022
(51) Int. Cl.: G07G 1/00, G07G 1/14, G06Q 20/20

(54) **INFORMATION PROCESSING DEVICE AND INFORMATION PROCESSING METHOD FOR PRODUCT REGISTRATION AND CHECKOUT SYSTEMS**

(30) Priority: 14.07.2021 JP 2021116626
(71) Applicant: Toshiba TEC Kabushiki Kaisha, Tokyo 141-8562 (JP)
(72) Inventor: Hiramatsu, Kenya, Shinagawa-ku, Tokyo 141-8562 (JP); Hiramatsu, Naotake, Shinagawa-ku, Tokyo 141-8562 (JP); Nakatsukasa, Fumio, Shinagawa-ku, Tokyo 141-8562 (JP); Hidaka, Shiori, Shinagawa-ku, Tokyo 141-8562 (JP); Sugiyama, Tomonori, Shinagawa-ku, Tokyo 141-8562 (JP); Takeda, Hiroki, Shinagawa-ku, Tokyo 141-8562 (JP)
(74) Representative: Bandpay & Greuter

(57) **Abstract**

According to one embodiment, an information processing device for product registration and checkout systems includes, a communication interface and a memory unit storing one or more capture conditions. A processor of the device is configured to check whether a registration of a commodity in a sales transaction satisfies a capture condition stored in the memory unit and output an instruction for capturing an image of the commodity if the registration satisfies the capture condition. The processor acquires an image of the commodity that was captured based on the instruction, and outputs the acquired image to an external apparatus via the communication interface.

## Description

### FIELD

Embodiments described herein relates generally to an information processing device and an information processing method for product registration and checkout processing systems.

### BACKGROUND

A transaction processing system that allows customers to use a mobile terminal, such as smartphone or tablet terminal, to input data related to commodities to be purchased while the customer moves around the sales floor is already in use.

The customers using this type of transaction processing system may perform final checkout processing at a self-service checkout machine. In such a system, in order to prevent customers from forgetting to register commodities or fraudulently misregistering items for checkout, various measures such as stationing a clerk in the checkout area to confirm the purchased commodities that the customers carry out from the checkout area can be applied.

However, it is generally difficult to compare registered commodities with all the actually purchased commodities for all customers in a convenient fashion. Therefore, there is a need for measures to more quickly and efficiently compare purchased commodities with the customer self-registered commodities.

### BRIEF DESCRIPTION OF THE DRAWINGS

FIG. 1 is a block view illustrating a schematic configuration of a transaction processing system according to an embodiment.
FIG. 2 is a perspective view illustrating an example of a shopping cart.
FIG. 3 is a process sequence view related to operations of a customer who uses a transaction processing system before shopping begins.
FIG. 4 is a process sequence view related to operations of a customer during shopping but before checking out.
FIG. 5 is a process sequence view related to operations of a customer checking out with a dedicated checkout machine.
FIG. 6 is a schematic view illustrating an example of an entry code reading screen displayed on a smartphone.
FIG. 7 is a schematic view illustrating an example of a registration screen displayed on a smartphone.
FIG. 8 is a schematic view illustrating an example of a scanning screen displayed on a smartphone.
FIG. 9 is a schematic view illustrating an example of the registration screen displayed on a smartphone.
FIG. 10 is a schematic view illustrating an example of a checkout screen displayed on a smartphone.
FIG. 11 is a block view schematically illustrating an example of a configuration of a monitoring server.
FIG. 12 is a block view schematically illustrating an example of a configuration of a smartphone.
FIG. 13 depicts a first index file stored in a transaction data storage area.
FIG. 14 depicts a first transaction file stored in the transaction data storage area.
FIG. 15 depicts captured image management data stored in a captured image storage area.
FIG. 16 is a flowchart of processing by a monitoring server.
FIG. 17 is a flowchart of processing by a smartphone.
FIG. 18 is a schematic view illustrating an example of a guidance screen displayed on a smartphone.

### DETAILED DESCRIPTION

The invention is set out in the appended set of claims.

An embodiment of the present disclosure provides a technological solution for problems related to streamlining (speeding) a post-checkout comparison between self-registered items and items being removed from the store or other retail location.

In general, according to one embodiment, an information processing device for product registration and checkout systems includes a communication interface, a memory unit storing one or more capture conditions, and a processor. The processor is configured to: check whether a registration of a commodity in a sales transaction satisfies a capture condition stored in the memory unit; output an instruction for capturing an image of the commodity if the registration satisfies the capture condition; acquire an image of the commodity that was captured based on the instruction; and output the acquired image to an external apparatus via the communication interface.

Hereinafter, certain example embodiments will be described with reference to drawings.

In an example embodiment, a transaction processing system that a customer operates or accesses with his or her smartphone to input data related to items being purchased while moving about the sales floor and then perform final checkout (including payment) at a dedicated checkout machine is provided as one example. A smartphone is one example of an information processing device operated by a customer. In the following description, the customer may be referred to as a user, a consumer, or a member.

### Configuration of Transaction Processing System

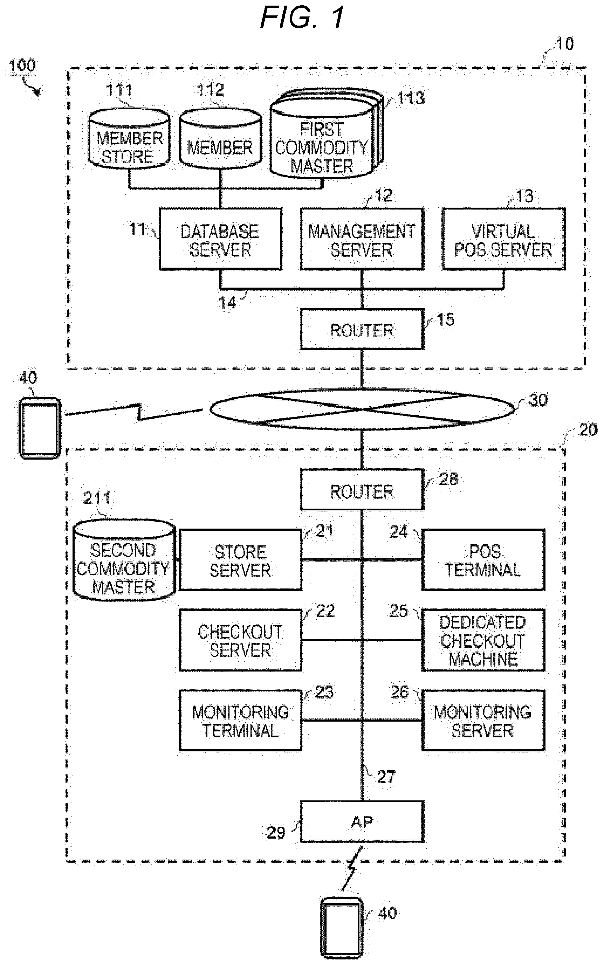

FIG. 1 is a block view illustrating a schematic configuration of a transaction processing system 100 according to an embodiment. The transaction processing system 100 includes a server system 10, utilizing cloud computing or the like, and a point of sales (POS) system 20 installed at a member store. The server system 10 and the POS system 20 enable bidirectional data communication through a network 30 using Internet protocol. The network 30 can be a wide-area network in which a public line or a dedicated line is used as a relay network and/or a wired local area network (LAN), a wireless LAN, a mobile communication network, a mobile phone communication network, or the like. Therefore, a smartphone 40 using a mobile phone communication network can access the server system 10 via the network 30.

The member store is a store that has contracted with the management company of the server system 10. FIG. 1 illustrates the POS system 20 of just one member store, but POS systems of other member stores are also connected to the network 30 in a manner similar to POS system 20. However, the POS systems of other member stores do not necessarily have the same configuration as the POS system 20 illustrated in FIG. 1. Part of the configuration of the other POS systems may differ depending on the preferences of the respective member store.

The server system 10 includes a database server 11, a management server 12, and a virtual POS server 13, and each server is connected by a communication line 14. The server system 10 connects to a router 15 in the communication line 14 and connects to the network 30 via the router 15.

The database server 11 is a computer that provides a service for managing a member store database 111, a member database 112, a first commodity master 113 and the like of each member store.

The member store database 111 is a collection of store records (member store records) created for each member store. Each member store record is keyed to a unique store ID set for a member store. Various data related to the member store is recorded in the member store record for each member store. The data in the member store record includes such things as the network address and the like required for communication with the member store via the network 30.

The member database 112 is a collection of member records created for each consumer who has registered as a member for shopping using the transaction processing system 100. Each member record is a keyed to a unique member ID set for each registered consumer. Various data related to the consumer is recorded in the member record for each member (registered consumer).

The first commodity master 113 of each member store is a collection of commodity records for each member store. The first commodity master 113 is a list of the products/items sold at the respective member store. Each product/item type sold at the store has a corresponding commodity record in the first commodity master 113. Each commodity record is keyed to a unique commodity code set for each item/product. Various data related to each commodity (product/item) is recorded in the commodity record. The commodity record data includes such things as a commodity name, unit price, and the like. Each first commodity master 113 can be uploaded from the corresponding member store POS system 20 to the database server 11 at a predetermined time, such as each morning before the store opens, or at regular intervals.

In some examples, the first commodity master 113 may be managed by the virtual POS server 13. Similarly, the management server 12 may manage the member store database 111 and the member database 112 in some examples. In such cases, the database server 11 may be omitted in whole or in part.

The management server 12 is a computer that cooperates with the database server 11 and the virtual POS server 13 to provide a service for managing information related to the transaction of a customer who shops at the member store by using the transaction processing system 100.

The virtual POS server 13 is a computer that provides a service for registering commodities being purchased by a customer according to use of a POS application in a sales transaction. The additional aspects of the management server 12 and the virtual POS server 13 will be explained in conjunction with a description of example operations below.

The POS system 20 includes a store server 21, a checkout server 22, a monitoring terminal 23, a POS terminal 24, a dedicated checkout machine 25, and a monitoring server 26, which are connected by an in-store network 27. The POS system 20 connects to a router 28 in the in-store network 27 and connects to the network 30 via the router 28. The POS system 20 also connects to an access point 29 in the in-store network 27 and enables data communication via a wireless LAN to/from mobile terminals such as the smartphone 40 or a tablet terminal via the access point 29.

The store server 21 is a computer that provides a service for managing sales information, commodity inventory information, ordering information, and the like for the member store based on the transactions settled (goods sold) at the member store where the POS system 20 is provided.

The store server 21 includes a second commodity master 211. The second commodity master 211 is a collection of commodity records for the member store. The second commodity master 211 is a list of products/items sold at the member store. Each product/item type sold at the store has a corresponding commodity record in the second commodity master 211. Each commodity record is keyed to a unique commodity code set for each item/product. Various data related to each commodity (product/item) is recorded in the commodity record. The commodity record data includes such things as a commodity name, unit price, and the like. The second commodity master 211 and the first commodity master 113 are generally intended to match one another, and the first commodity master 113 may be a copy of the second commodity master 211 that has been uploaded to the server system 10. However, if the price of an item or other information in the second commodity master 211 is changed during business hours, the change will only be reflected in the data of the second commodity master 211. Therefore, depending on the commodity, the price or other information may differ between the first commodity master 113 and the second commodity master 211 absent an updating of the first commodity master 113.

The store server 21 is a computer that provides a service for supporting a member monitoring function at the monitoring terminal 23. The member monitoring function is a function of monitoring the status of customers who are presently using the transaction processing system 100 for shopping at the member store. According to this member monitoring function, the monitor at the monitoring terminal 23 can display a list of registered commodities the customer has input by using a smartphone 40 while on the sales floor. In this context, registered commodities are the commodities before payment but for which the customer has indicated an intention to purchase by registering the commodity by using smartphone 40. The registered commodities are also sometimes more simply just called commodities. The monitoring terminal 23 displays a monitoring image on the monitor. The monitoring image is an image for monitoring the information of the registered commodities input by using the smartphone 40, the status of the smartphone 40, and the like. The monitoring image includes a list of registered commodities, a captured image of picked commodities, or the like. In this context, a picked commodity is a commodity for which payment has not yet been made (i.e., before settlement) but that has been picked up and placed in a shopping basket or the like. Such picked commodities are presumed to be commodities that the customer plans to purchase.

The member monitoring function provides an ability for the monitoring clerk to compare the listed information about the customer's registered items with the picked commodities. It may be the case that only certain item types or commodity registration events are of particular concern, and thus only these item types or events might trigger additional, targeted monitoring or checking by the clerk(s) or store system(s). The monitoring targets might include commodities that are suspected of being forgotten (left unregistered) or fraudulently registered (e.g., misregistered as a less expensive item). In addition, a warning can be displayed on the monitor for the clerk if a triggering event occurs due to the data input by the customer. The triggering event can be, for example, if a customer purchases alcohol, cigarettes, or the like with age restrictions, or if a registration error occurs because the commodity code from a scanned barcode is not presently in the second commodity master 211.

The checkout server 22 is a computer that provides a service for supporting the checkout of members by using the dedicated checkout machine 25. Additional aspects of the checkout server 22 will be explained below in conjunction with an explanation of its operations.

The POS terminal 24 is a checkout machine primarily for settling a transaction with a customer who does not use the transaction processing system 100. The POS terminal 24 is operated by a clerk. In some instances, POS terminal 24 can also settle transactions for a customer who uses the transaction processing system 100. In some examples, POS terminal 24 may be separated into distinct components: a registration machine at which products being purchased are scanned or the like, and a checkout machine at which payments for the registered products can be made. The registration machine may be operated by a clerk, and the checkout machine may be operated by the customer as a semi-self service terminal or the like. The POS terminal 24 may also or instead be a full-self-service terminal or kiosk at which a customer may perform registration processing and checkout processing by himself or herself.

The dedicated checkout machine 25 allows a customer who uses the transaction processing system 100 to settle a transaction. The customer is the operator of the dedicated checkout machine 25. In general, a customer who does not use the transaction processing system 100 cannot make payments at the dedicated checkout machine 25.

The dedicated checkout machine 25 can scan a checkout barcode displayed on the smartphone 40 being used by a customer. The checkout barcode is generated by use of the transaction processing system 100. The dedicated checkout machine 25 performs payment processing for settlement of the amount of the transaction. Various payment methods such as electronic money, credit card, and cash, as well as an electronic money charge function, or the like may be used for transaction settlement.

The monitoring server 26 is a computer for monitoring the information about the registered items a customer has registered using the smartphone 40 on the sales floor. The monitoring server 26 cooperates with the store server 21 to provide a member monitoring function at the monitoring terminal 23. Additional aspects of the monitoring server 26 will be explained below in conjunction with an explanation of its operations. The monitoring server 26 is one example of an information processing device.

### Structure of Shopping Cart

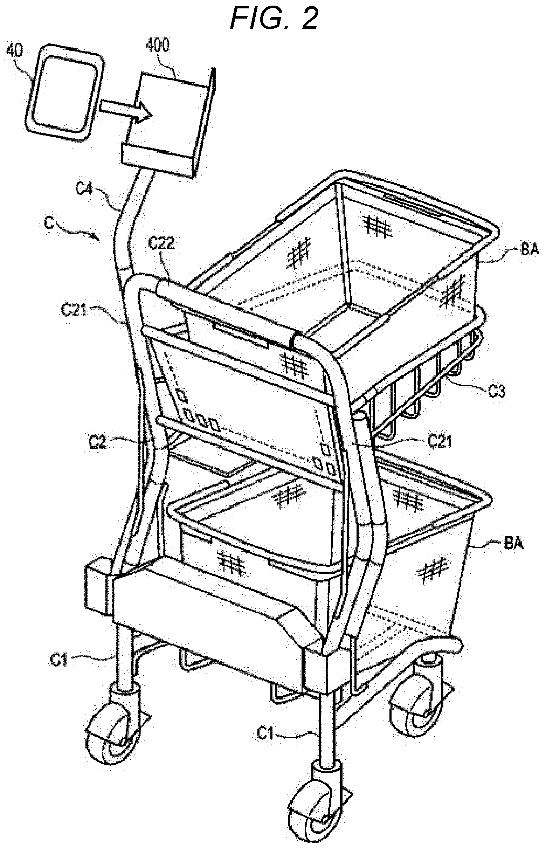

FIG. 2 is a perspective view illustrating an example of a cart C (shopping cart) according to an embodiment. The cart C includes a caster portion C1 for movement, a handle frame portion C2, and a basket receiving portion C3. The caster portion C1 has four wheels for smooth movement on a floor surface. The handle frame portion C2 includes a pair of vertical frames C21 on the rear wheel side of the caster portion C1 and a handle bar C22 connecting the upper ends of the vertical frames C21. The basket receiving portion C3 is in front of the handle frame portion C2. In the cart C, a shopping basket BA provided at the store can be placed in the basket receiving portion C3 or below.

A pole C4 is attached to one of the vertical frames C21. At the tip of the pole C4, a stand 400 for a smartphone 40 is provided. A customer who uses the cart C can place a smartphone 40 on the stand 400 during shopping.

### Operation of Transaction Processing System

Next, an operation of the transaction processing system will be described. The operation includes various stages or periods: preparation, before shopping, during shopping, before checkout, and checkout.

### Preparation

A consumer who wants to shop at a member store by using the transaction processing system 100 first installs a dedicated application program (a "shopping app") on the smartphone 40 and registers as a member. Member registration is performed on the management server 12 of the server system 10 via the network 30. The management server 12 issues a member ID that is unique to the consumer/member, and generates a member record in which the unique member ID is recorded in the member database 112 in conjunction with additional information regarding the now-registered member. The management server 12 transmits the assigned member ID via the network 30 to the smartphone 40. The smartphone 40 stores the member ID in association with the shopping application.

Members can register to use electronic money at the member store(s). This initial registration for use is performed from the smartphone 40 in conjunction with the management server 12 via the network 30. The management server 12 may thus record an electronic money ID in the member record. Registration for using electronic money is not mandatory for use of the transaction processing system 100.

### Before Shopping

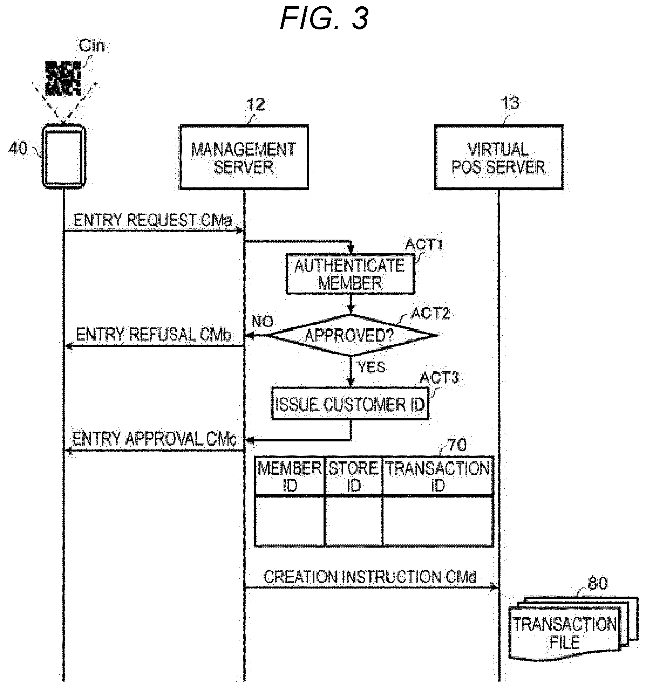

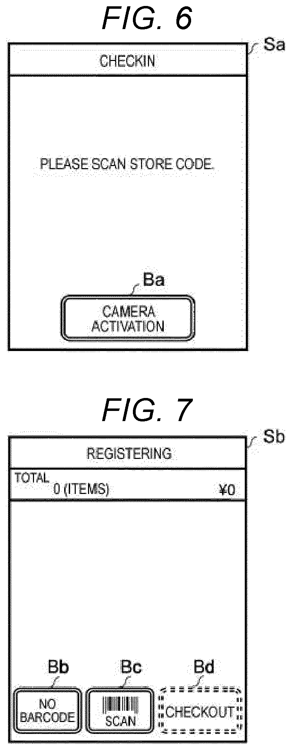

Before entering a member store, the registered member operates the smartphone 40 to turn on (load) the shopping application. After the shopping application is turned on, the touch panel screen of the smartphone 40 changes to an entry code reading screen Sa (FIG. 6). The entry code reading screen Sa is a screen for reading an entry code Cin (FIG. 3) with the camera of the smartphone 40.

The entry code Cin is typically available at the entrance of the member store. For example, the entry code Cin is printed on a sign posted at the entrance. For example, the entry code Cin is displayed in a prominent manner at the store entrance. The entry code Cin is, for example, a two-dimensional code either encoding or otherwise providing information for setting shopping app and transaction system parameters particular to the member store. The setting information includes the store ID set for the member store, wireless LAN settings, and the like. The wireless LAN settings are such things as the SSID, network password, security information, and the like required for the smartphone 40 to connect to the access point 29 using the wireless LAN.

As illustrated in FIG. 6, a camera activation button Ba is displayed on the entry code reading screen Sa. When member touches the camera activation button Ba, the camera of the smartphone 40 is activated. The member then points the camera at the entry code Cin. The camera scans the entry code Cin.

Once the entry code Cin is scanned, the smartphone 40 sends an entry request command CMa (FIG. 3) to the management server 12 via the network 30. The entry request command CMa includes at least the member ID associated with the smartphone 40 and the store ID from the entry code Cin.

The management server 12 acquires the member ID from the entry request command CMa and authenticates the member (FIG. 3, ACT 1). Member authentication is performed by confirming whether the member ID is a valid member ID. For example, an invalid flag may be recorded in a member record of a previously registered consumer who has lost the membership qualification due to a withdrawal application, fraudulent activity, or the like. If the management server 12 acquires a member ID for which an invalid flag is recorded in the member record, the management server 12 rejects the member authentication in response to the entry request command CMa. If the management server 12 acquires the member ID for which an invalid flag is not recorded, the management server 12 approves the member authentication in response to the entry request command CMa.

The management server 12 thus determines whether to approve or reject the member authentication (FIG. 3, ACT 2). If the member authentication is rejected, the management server 12 returns an entry refusal command CMb to the smartphone 40. The entry refusal command CMb is transmitted to the smartphone 40 via the network 30. The smartphone 40 that receives the entry refusal command CMb stops the shopping application. Therefore, the customer cannot perform so-called self-service shopping using the smartphone 40 by himself or herself.

The management server 12 issues a transaction ID if the member authentication is approved (FIG. 3, ACT 3). The transaction ID is a unique ID set for each separate shopping event (e.g., a new transaction ID is set for each separate trip by the member to the member store). For example, a unique transaction ID is issued by combining a store code, a date, and a serial number. The management server 12 stores the member ID and the store ID acquired from the entry request command CMa in association with the issued transaction ID in an association table 70 (FIG. 3). That is, the association table 70 is a data table that stores the store ID of the member store where a consumer is shopping in association with the unique transaction ID issued for the transaction of the consumer, and in association with the member ID of the consumer who makes self-service shopping.

When member authentication is accepted, the management server 12 returns an entry approval command CMc to the smartphone 40. The entry approval command CMc is transmitted to the smartphone 40 via the network 30. The smartphone 40 that has received the entry approval command CMc connects to the access point 29 via the wireless LAN by using the wireless LAN data acquired from the entry code Cin. When the smartphone 40 is connected to the access point 29 via the wireless LAN, the touch panel screen changes to a shopping start screen. The shopping start screen is a screen that prompts the consumer to start shopping. A shopping start button is displayed on the shopping start screen.

The management server 12 that has transmitted the entry approval command CMc also transmits a creation instruction command CMd for a transaction file to the virtual POS server 13. The creation instruction command CMd includes the store ID and the transaction ID stored in association with the member ID in the association table 70. Upon receiving the creation instruction command CMd, the virtual POS server 13 creates a transaction file 80 (FIG. 3) in a storage unit. Then, the virtual POS server 13 includes the store ID and the transaction ID from the creation instruction command CMd in the transaction file 80. The transaction file 80 is a data file in which sales data of the commodities being purchased by the member in a transaction identified with the transaction ID and the payment data required for the settlement amount of the transaction are recorded.

### During Shopping

The member who has confirmed the shopping start screen touches the shopping start button. Then, the touch panel screen changes to a registration screen Sb (FIG. 7). As illustrated in FIG. 7, the total quantity and total amount of registered commodities are displayed on the registration screen Sb. However, since there is no commodity yet that is registered, the total quantity and the total amount are both "0". In addition, a no barcode button Bb, a scan button Bc, and a checkout button Bd are displayed on the registration screen Sb. The no barcode button Bb is a button to be touched to permit the inputting data of a commodity that lacks a barcode. The scan button Bc is a button to be touched to permit inputting data of a commodity with a barcode. The checkout button Bd is a button to be touched when finishing shopping and requesting checkout (settlement of the transaction). However, the checkout button Bd is disabled in FIG. 7 because no commodity has been registered yet. For example, the checkout button Bd is grayed out or the like. In some examples, checkout button Bd may be absent (not displayed) until a commodity is registered.

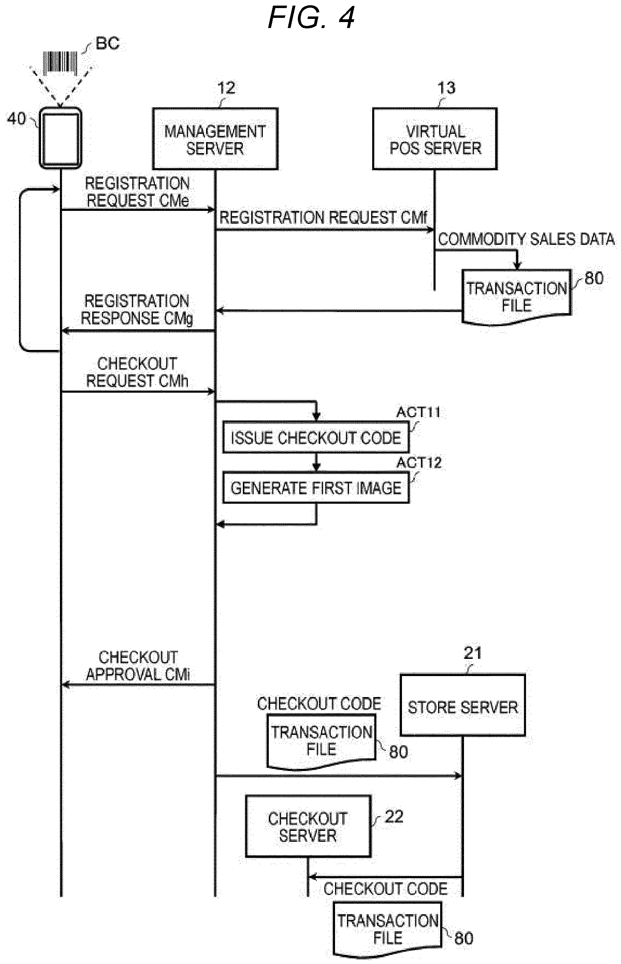

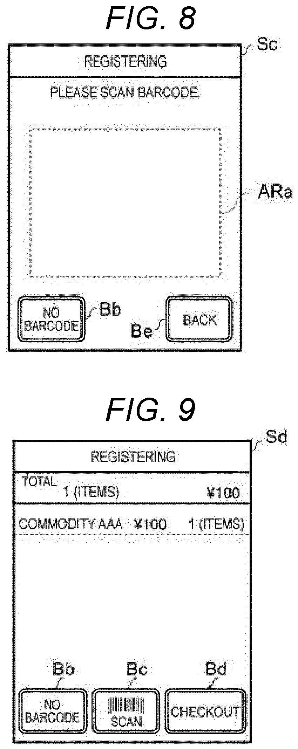

If a member finds a commodity on the sales floor to purchase, the member checks whether the commodity has a barcode BC (FIG. 4). If a barcode BC is attached to the item, the member touches the scan button Bc. After the scan button Bc is touched, the touch panel screen changes to a scanning screen Sc (FIG. 8). As illustrated in FIG. 8, a border ARa indicating a barcode reading area is displayed on the scanning screen Sc. In addition, on the scanning screen, the no barcode button Bb and a back button Be are displayed. The back button Be is a button to be touched if scanning of the barcode BC is to be stopped/cancelled.

The member manipulates the smartphone 40 so that the barcode BC of the selected commodity is within the border ARa. Once the barcode BC fits inside the border ARa, the barcode BC can be scanned by the camera of the smartphone 40.

The smartphone 40 that scans the barcode BC transmits a registration request command CMe (FIG. 4) to the management server 12 via the wireless LAN. The registration request command CMe includes member ID and barcode BC data (barcode data). The registration request command CMe is received by the access point 29 and further transmitted from the router 28 to the management server 12 via the network 30.

The management server 12 searches the association table 70 for the member ID included in the registration request command CMe to acquire the store ID and the transaction ID associated presently associated with the member ID. Then, the management server 12 transmits a registration request command CMf in which the member ID is replaced with the store ID and the transaction ID to the virtual POS server 13.

The virtual POS server 13 acquires the store ID, transaction ID, and barcode data from the registration request command CMf. Then, the virtual POS server 13 acquires the commodity code based on the barcode data. The virtual POS server 13 searches the first commodity master 113 of the member store specified by the store ID to acquire a commodity record matching the commodity code. Then, based on the commodity data of the commodity record, the virtual POS server 13 registers the commodity sales data including commodity code, commodity type, commodity name, price, sale quantity, sales amount, and the like in the transaction file 80 for transaction ID (and store ID).

The management server 12 acquires the transaction file 80 from the virtual POS server 13. Then, the management server 12 transmits a registration response command CMg (FIG. 4) to the smartphone 40 that sent the registration request command CMe. The registration response command CMg contains the data of the transaction file 80 acquired from the virtual POS server 13. The registration response command CMg is transmitted from the router 15 to the POS system 20 via the network 30, and further transmitted from the access point 29 to the smartphone 40.

On the smartphone 40 that has received the registration response command CMg, the touch panel screen changes to a registration screen Sd (FIG. 9). The registration screen Sd in FIG. 9 is a screen with the commodity sales data related to a first commodity AAA registered in the transaction file 80. As illustrated in FIG. 9, the sales amount "¥ 100" and the sale quantity "1" of the commodity AAA are displayed on the registration screen Sd. In addition, the total quantity will be "1" and the total amount will be "¥ 100" since just the single commodity AAA has been registered at this time. In addition, the checkout button Bd is now enabled.

Thereafter, the member again touches the scan button Bc for to scan the barcode of the next item(s) to be purchased. By doing so, the management server 12 and the virtual POS server 13 operate in the same manner as described above for the registration of the first commodity (commodity AAA). As a result, the commodity name, sales amount, and sale quantity of all the registered commodities, and the total quantity and total price are displayed on the registration screen Sb.

It should be noted that the sales amount for the commodity sales data stored in the transaction file 80 is calculated based on the prices listed in the first commodity master 113. Thus, if there is a price change during business hours, the updated price might not be reflected in the first commodity master 113. Therefore, the sales amount and total amount displayed on the registration screen Sd may differ from the amounts based on the actual current prices. Therefore, the sales amount and the total amount displayed on the registration screen Sd are to be considered as representative prices/amounts during the shopping process rather than the final checkout price.

If a commodity does not have a barcode, the member touches the no barcode button Bb. Then, a list of commodities that lack a barcode is displayed on the touch panel of the smartphone 40, and the member selects a commodity from the list. Then, the registration request command CMe including the commodity ID of the selected commodity is transmitted to the management server 12. Subsequent operations are the same as if a barcode BC was scanned on the smartphone 40.

### Before Checkout

The member who finishes shopping on the sales floor and wishes to shift to checkout touches the checkout button Bd on the registration screen Sd. After the checkout button Bd is touched, the smartphone 40 transmits a checkout request command CMh (FIG. 4) to the management server 12 via the wireless LAN. The checkout request command CMh includes the member ID. The checkout request command CMh is received by the access point 29 and transmitted from the router 28 to the management server 12 via the network 30.

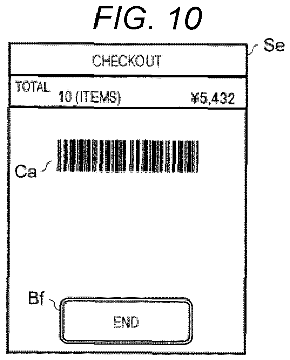

The management server 12 issues a checkout code (FIG. 4, ACT 11). The checkout code is, for example, a combination of a date, a time, and a serial number, and no duplicate checkout codes are issued in the same business day. The management server 12 generates a first image Ca (FIG. 10) (FIG. 4, ACT 12). The first image Ca is an image obtained by converting the issued checkout code into a barcode representative, that is, an image of a checkout barcode.

The management server 12 transmits a checkout approval command CMi to the smartphone 40 that sent the checkout request command CMh. The checkout approval command CMi includes the first image Ca.

The checkout approval command CMi is transmitted to the POS system 20 via the network 30, and is transmitted from the access point 29 to the smartphone 40 via the wireless LAN. On the smartphone 40 that has received the checkout approval command CMi, the touch panel screen changes to a checkout screen Se (FIG. 10). As illustrated in FIG. 10, the first image Ca is displayed on the checkout screen Se. In addition, an end button Bf is displayed on the checkout screen Se. The end button Bf is a button to be touched when canceling the checkout.

The management server 12 acquires the store ID and the transaction ID stored in the association table 70 in association with the member ID acquired from the checkout request command CMh. Then, the management server 12 acquires the transaction file 80 in which the store ID and the transaction ID are described, from the virtual POS server 13. Then, the management server 12 transmits the transaction file 80 and the checkout code to the POS system 20 of the member store matching the store ID.

As a result, the transaction file 80 and the checkout code data are transmitted to the store server 21 of the corresponding member store via the network 30. The store server 21 transfers the transaction file 80 and the checkout code data received from the management server 12 to the checkout server 22. The checkout server 22 stores the transaction file 80 in the memory in association with the checkout code.

### Checkout

The member uses the dedicated checkout machine 25 (e.g., a payment kiosk or terminal) to perform checkout by one or more of various payment methods such as electronic money, credit card, and cash.

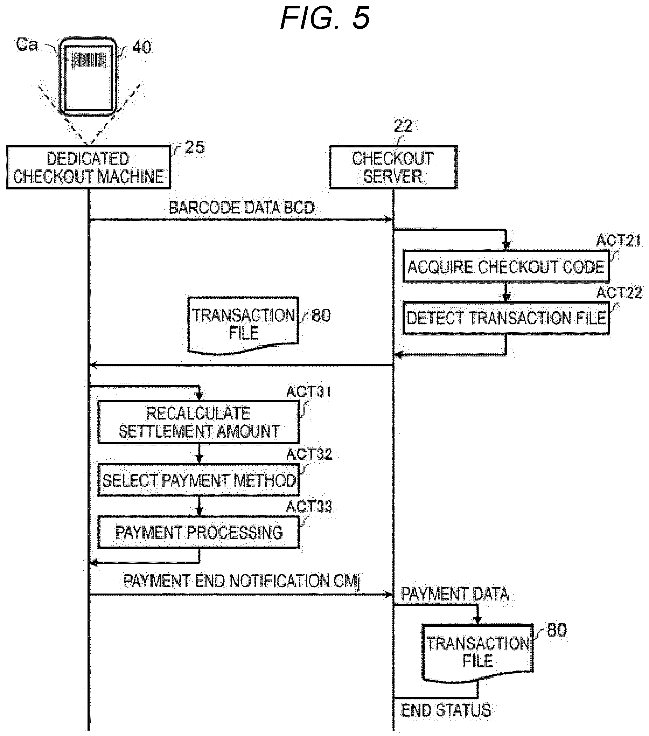

The operation of checkout using the dedicated checkout machine 25 will be described with reference to FIG. 5. The member scans the first image Ca of the checkout screen Se, that is, the checkout barcode, with the scanner of the dedicated checkout machine 25. Then, the checkout barcode data, barcode data BCD (FIG. 5), is transmitted from the dedicated checkout machine 25 to the checkout server 22.

The checkout server 22 acquires the checkout code from the barcode data BCD (FIG. 5, ACT 21). Then, the checkout server 22 identifies the transaction file 80 associated with the checkout code (FIG. 5, ACT22). The checkout server 22 transmits the corresponding transaction file 80 to the dedicated checkout machine 25.

The dedicated checkout machine 25 recalculates the settlement amount by reference to the second commodity master 211 managed by the store server 21. Specifically, the dedicated checkout machine 25 acquires the commodity codes registered in the transaction file 80, then searches the second commodity master 211 to acquire the prices for each commodity code. The dedicated checkout machine 25 multiplies the unit price by the sale quantity registered in the transaction file 80 for the corresponding commodity code to calculate the sales amount. The dedicated checkout machine 25 executes the above processing for all commodity codes registered in the transaction file 80. Then, the dedicated checkout machine 25 calculates the settlement amount (sales total) by adding up the sales amounts of all the purchased commodities.

The dedicated checkout machine 25 displays the recalculated settlement amount on the display. Then, the checkout machine 25 waits for the payment method to be selected (FIG. 5, ACT 32). The recalculated settlement amount may differ from the total amount previously displayed on the smartphone 40. However, since the total amount on the smartphone 40 is only a representative amount rather than an exact, actual amount, the customer pays the settlement amount displayed on the dedicated checkout machine 25.

The member selects a payment method. For example, if cash is selected, the dedicated checkout machine 25 executes payment processing in which the settlement amount is paid in cash (FIG. 5, ACT 33). If a credit card is selected, the dedicated checkout machine 25 executes payment processing by which the settlement amount is paid by a credit card. Since these payment processing are well-known processing, detailed description thereof will be omitted here.

Once the payment processing is completed, the dedicated checkout machine 25 transmits a payment end notification command CMj to the checkout server 22. The payment end notification command CMj contains payment data. For example, in the case of cash payment, the payment data is a deposit amount, a change due amount, and the like. In the case of credit card payment, the payment data is the payment amount by credit card or the like.

The checkout server 22 now registers the payment data in the transaction file 80. The checkout server 22 also sets the end status in the transaction file 80. The transaction file 80 for which the end status is set is stored in the recording unit of the checkout server 22 or the store server 21.

### Configuration of Monitoring Server

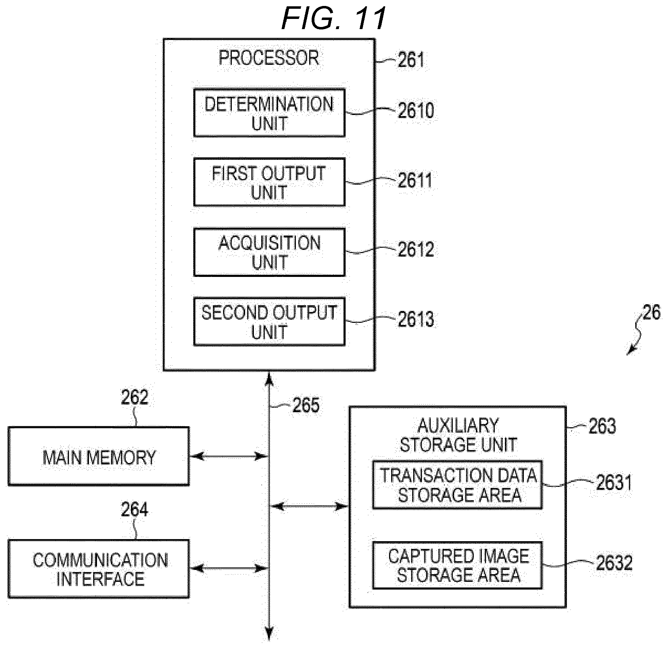

FIG. 11 is a block view schematically illustrating an example of a configuration of the monitoring server 26 according to an embodiment. The monitoring server 26 includes a processor 261, a main memory 262, an auxiliary storage unit 263, a communication interface 264, and a transmission line 265. The processor 261, the main memory 262, the auxiliary storage unit 263, and the communication interface 264 are capable of communicating via the transmission line 265.

The processor 261 realizes various functions of the monitoring server 26 according to, for example, execution of an application program in conjunction with an operating system or the like. The processor 261 is, for example, a central processing unit (CPU).

The main memory 262 includes a non-volatile memory area and a volatile memory area. The main memory 262 stores the operating system and the application program in the non-volatile memory area. The main memory 262 may store data necessary for the processor 261 to execute processing. The volatile memory area may be used as a work area where data can be appropriately rewritten by the processor 261. For example, the non-volatile memory area is a read only memory (ROM). The volatile memory area is a random access memory (RAM).

The auxiliary storage unit 263 may be, for example, an electric erasable programmable read-only memory (EEPROM), a hard disc drive (HDD), a solid-state drive (SSD), or the like. The auxiliary storage unit 263 stores data used by the processor 261 for performing various kinds of processing and data created by the processing of the processor 261. The auxiliary storage unit 263 may store the application program.

The communication interface 264 performs data communication with each unit connected to the in-store network 27 according to a predetermined communication protocol. As the communication interface 264, for example, a well-known communication device for LAN can be applied.

The transmission line 265 includes an address bus, a data bus, a control signal line, and the like, and transmits data and control signals transmitted and received between the connected parts.

The auxiliary storage unit 263 includes a transaction data storage area 2631 and a captured image storage area 2632.

The transaction data storage area 2631 stores first transaction data based on the data stored in the virtual POS server 13. The first transaction data is an example of information on the registration of commodities. The information on the registration of the commodity includes information on commodities registered via the smartphone 40 before payment and information on commodity registration via the smartphone 40. The information on a commodity includes information indicating commodity type, the price of the commodity, the registered quantity, and the like. The commodity type includes information indicating an age-restricted commodity such as alcoholic beverages and cigarettes. The price indicates the unit price of the commodity. The registered quantity indicates the total quantity of the commodities registered by the member. The information on commodity registration includes information on the commodity registration operation via the smartphone 40 and information on the time associated with the commodity registration via the smartphone 40. The information related to the commodity registration operation includes information on transaction editing such as adding and deleting registered commodities, information about operations for registering commodities without barcodes, information about operations for shifting to checkout processing, and location information indicating where the commodity registration operation was performed. The information related to time includes information indicating staying time (store dwell time), the last operation time, and the like.

The first transaction data includes a first index file and a first transaction file. The first index file is the data associated with a plurality of first transaction files. The first index file is a collection of index file records created for each terminal ID. The index file record is a data record in which the terminal ID is associated with the transaction ID, the staying time, the last operation time, the registered quantity, the status, the checkout machine ID, and the like.

The terminal ID is a unique code set for each smartphone 40 in order to individually identify each smartphone 40. The transaction ID is a unique code set for each first transaction file in order to individually identify the transactions made using the smartphone 40. The transaction ID is set in the first transaction file each time a first transaction file is created. The transaction ID can be associated with the member ID and the store ID, as in the association table 70.

The staying time indicates the elapsed time since the member logged in. The last operation time indicates the time when the member last operated the smartphone 40. For example, the last operation time indicates the time when a commodity was last registered by the member.

The status is a terminal status indicating the status of the smartphone 40. The terminal status may be "waiting", "registering", and "checkout in progress". In this context, "waiting" is the state from the completion of the checkout to the next login . In this context, "registering" is the state from login to the approval of the checkout. In this context, "checkout in progress" is the state from the approval of checkout to the end of checkout.

The checkout machine ID is a unique code set for each checkout machine in order to individually identify each checkout machine. In addition to the above-mentioned items, the first index file may contain information such as the total amount of registered commodities. The first index file is associated with the first transaction file by using the transaction ID as a key.

The first transaction file is a collection of transaction file records created for each transaction ID. The transaction file record is a data record recorded by associating the transaction ID with the commodity sales data. The commodity sales data includes commodity code, commodity type, commodity name, price, sale quantity, sales amount, and the like. The first transaction file may be the data generated in the same manner as the transaction file 80. The first transaction file is updated each time the member registers another commodity.

The captured image storage area 2632 stores captured image management data. The captured image management data includes image data recorded (captured) by the smartphone 40. The captured image data includes an image of a picked commodity of the member. The captured image storage area 2632 may store a plurality of captured images in a time series. The captured image management data is updated each time another captured image is acquired by an acquisition unit 2612.

The hardware configuration of the monitoring server 26 is not limited to the above configuration. Components may be omitted, modified, or added as appropriate.

With the processor 261, by execution of program instructions or the like, a determination unit 2610, a first output unit 2611, the acquisition unit 2612, and a second output unit 2613 can be considered to be generated. Such units may be generated by the processor 261 in combination with the main memory 262 or the like. In general, the functions described for these various units are implemented by operations of the processor 261 in combination with other hardware components of the monitoring server 26 or the like.

The determination unit 2610 checks whether the first transaction data satisfies certain "capture conditions" that have been established beforehand and, for example, stored in main memory 262 or auxiliary storage unit 263. The capture conditions indicate whether or not an image/photograph including therein the commodity being registered should be acquired. The capture conditions may include conditions related to a commodity and/or conditions related to the commodity registration process. When one or more of the capture conditions are satisfied, additional monitoring or processing may be performed in addition to the taking of an image of commodity or the like.. The conditions related to the commodities include, for example, quantity limits, prices, unit sizes, product types, and the like for the registered commodity. A condition may be set based on the number of items in the transaction, for example. For example, any item after some threshold number of items may trigger a capture condition, or every fifth (or other fixed increment) item registered in the transaction may trigger a capture condition. The registering of a high-priced commodity such as "1000 Yen or more" may be a trigger event. As noted, registering certain product types such as alcoholic beverages may trigger additional monitoring. The conditions related to the commodity registration process includes such as a time of day when the registration occurs, a particular location within the store where the registration was performed, a length of time shopping at the store, the length of time between registration events exceeding a threshold time, the total number of item registrations cancelled and/or re-registered during a transaction, initiating a settlement operation, returning to product registration after initiating a settlement operation, inclusion of an item in the transaction lacking a barcode, and the like. For example, if the user performs editing of the transaction via the smartphone 40, such as a manual addition or deletion of a registered commodity, registers a commodity without a barcode, or shifts to checkout processing, if location information is not provided indicating where a commodity registration operation was performed, or if the item's known display location does not match closely with the location at which the item was registered, then additional monitoring may be required.

The first output unit 2611 outputs an instruction for photographing the commodity to the smartphone 40 based on a determination result of the determination unit 2610. For example, the first output unit 2611 outputs a notification instruction with capture guidance to the smartphone 40 based on the determination by the determination unit 2610 that the first transaction data satisfies at least one of the capture conditions. The notification instruction with the capture guidance is, for example, an instruction (or command) by which a processor 401 of the smartphone 40 controls a touch panel 404. The processor 401 causes the touch panel 404 to display the capture guidance in response to the notification instruction. The capture guidance may be a notification prompting the member to photograph the commodity. The notification prompting is, for example, text information such as "Please capture your commodity". The notification prompting may be a notification of any kind such as a symbol, an icon, a sound, a voice, and/or a moving image. If the notification prompting is in voice, the processor 401 of the smartphone 40 controls a voice output device 406 to output the capture guidance by voice in response to the notification instruction. If the notification prompting is a moving image, the processor 401 controls the voice output device 406 and the touch panel 404 to output the capture guidance in response to the notification instruction. The capture guidance may include a capture guide or settings and instructions for rendering such an element. In this context, a capture guide can be a border or frame indicating the size of area to be imaged and/or a positioning of the camera 405.

In another example, the first output unit 2611 outputs a commodity capture instruction to the smartphone 40 based on the determination by the determination unit 2610 that the first transaction data satisfies the capture conditions. The commodity capture instruction is an instruction (or command) by which the processor 401 controls camera 405. The processor 401 turns on the camera 405 in response to the commodity capture instruction and controls the camera 405 to automatically image the commodity. In the following description, "in response" may be read as "based on" or "according to".

The acquisition unit 2612 acquires the captured image of the commodity from the camera 405.

The second output unit 2613 outputs the captured image (or data corresponding thereto) acquired by the acquisition unit 2612 to the monitoring terminal 23.

### Configuration of Smartphone

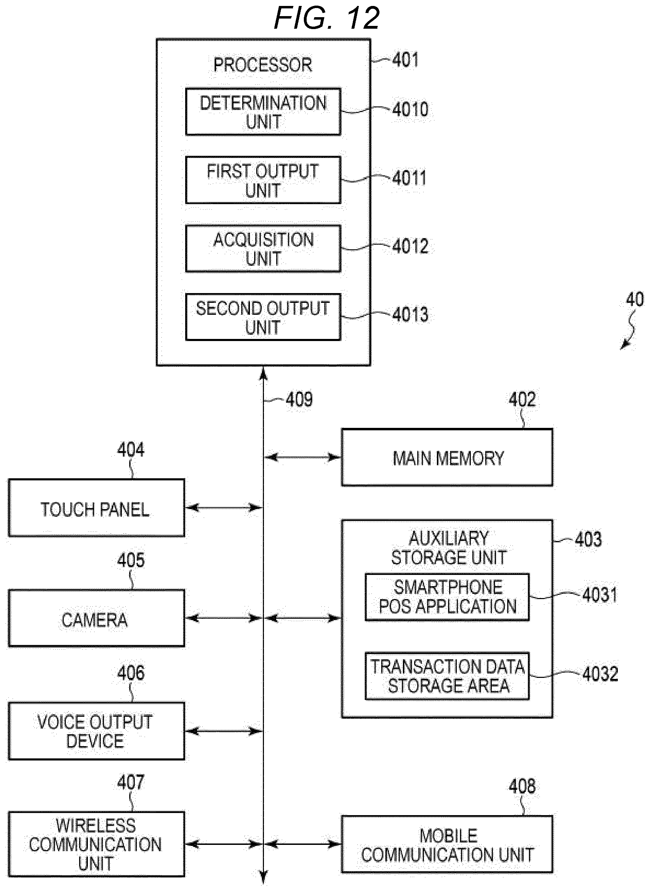

FIG. 12 is a block view schematically illustrating an example of a configuration of the smartphone 40 according to the embodiment. The smartphone 40 includes the processor 401, a main memory 402, an auxiliary storage unit 403, the touch panel 404, the camera 405, the voice output device 406, a wireless communication unit 407, a mobile communication unit 408, a transmission line 409, and the like. The processor 401, the main memory 402, the auxiliary storage unit 403, the touch panel 404, the camera 405, the voice output device 406, the wireless communication unit 407, and the mobile communication unit 408 can communicate with each other via the transmission line 409. A computer for controlling the smartphone 40 is configured by connecting the processor 401, the main memory 402, and the auxiliary storage unit 403 by the transmission line 409. Since the outline of the functions of the processor 401, the main memory 402, the auxiliary storage unit 403, and the transmission line 409 is the same as that of the processor 261, the main memory 262, the auxiliary storage unit 263, and the transmission line 265, the description thereof will be omitted.

The touch panel 404 functions as an operation device and a display device of the smartphone 40. The touch panel 404 is an example of a display unit for displaying information or a notification unit for visually notifying information.

The camera 405 includes an optical system and an image sensor. The image sensor generates image data representing an image in a field of view formed by the optical system. The camera 405 is an example of a capture unit or an image capture unit.

The voice output device 406 is capable of outputting sound under the control of the processor 401. The voice output device 406 is an example of a voice output unit that outputs information by sounds or a notification unit that audibly provides information.

The wireless communication unit 407 exchanges data with and from the access point 29 by wireless communication according to the wireless communication protocol. As the wireless communication unit 407, for example, a well-known communication device compliant with the IEEE 802.11 standard can be used.

The mobile communication unit 408 is an interface for data communication via the network 30. As the mobile communication unit 408, for example, a well-known communication device for performing data communication via a mobile communication network can be used.

The auxiliary storage unit 403 includes a smartphone POS application 4031 and a transaction data storage area 4032. The smartphone POS application 4031 is an application program ("app") and provides software instructions for providing information processing for making the smartphone 40 function as a user interface of the POS system 20. The smartphone POS application 4031 may be used on a plurality of smartphones 40.

The transaction data storage area 4032 stores second transaction data based on the data stored in the virtual POS server 13. The second transaction data is an example of information on the registration of commodities. The second transaction data includes a second index file and a second transaction file. The second index file and the second transaction file contain information on the commodities registered by the smartphone 40. The second index file includes data associated with the terminal ID, transaction ID, staying time, last operation time, registered quantity, status, checkout machine ID, and the like.

The terminal ID is a unique code set to identify the smartphone 40. The transaction ID is a unique code set for each second transaction file in order to individually identify the second transaction file that records the transactions made by using the smartphone 40. The transaction ID is set in the second transaction file each time the second transaction file is created. The transaction ID is associated with the member ID and the store ID, as in the association table 70. The second index file contains the index file record associated with each of the smartphones 40 and the corresponding terminal ID among the first index files stored in the transaction data storage area 2631 of the monitoring server 26.

The second transaction file includes the transaction ID and the commodity sales data in association with each other. The commodity sales data includes commodity code, commodity type, commodity name, price, sale quantity, sales amount, and the like. The second transaction file may be generated in the same manner as the transaction file 80. The second transaction file is updated each time the member registers a commodity. The second transaction file contains a transaction file record associated with each of the smartphones 40 and the corresponding transaction ID among the first transaction files stored in the transaction data storage area 2631 of the monitoring server 26.

The hardware configuration of the smartphone 40 is not limited to the above configuration. Components may be omitted, modified, or added as appropriate.

With the processor 401, by execution of program instructions or the like, a determination unit 4010, a first output unit 4011, an acquisition unit 4012, and a second output unit 4013 can be considered to be generated. Such units may be generated by the processor 401 in combination with the main memory 402 or the like. In general, the functions described for these various units are implemented by operations of the processor 401 in combination with other hardware components of the smartphone 40 or the like.

The determination unit 4010 checks whether the second transaction data satisfies the capture conditions. The capture conditions are the same as those already mentioned above.

The first output unit 4011 outputs an instruction for photographing the commodity to the touch panel 404 based on the determination result of the determination unit 4010. For example, the first output unit 4011 outputs a notification instruction to the touch panel 404 based on the determination by the determination unit 4010 that the second transaction data satisfies the capture conditions. The notification instruction is an instruction to provide the capture guidance for the commodity. The notification instruction is, for example, an instruction (or command) by which the processor 401 controls the touch panel 404. The processor 401 causes the touch panel 404 to display the capture guidance in response to the notification instruction. The capture guidance includes a notification prompting the member to capture an image of the commodity. The notification prompting is, for example, text information such as "Please capture your commodity". The notification prompting may include or be a notification of any kind such as a symbol, an icon, a voice, a sound, and/or a moving image. If the notification prompting is a voice, the processor 401 outputs an instruction for photographing the commodity to the voice output device 406. The processor 401 controls the voice output device 406 to output the capture guidance by voice in response to the notification instruction. If the notification prompting is in a moving image, the processor 401 outputs an instruction for photographing the commodity to the touch panel 404 and the voice output device 406. The processor 401 controls the voice output device 406 and the touch panel 404 to output the capture guidance in response to the notification instruction. In another example, the first output unit 4011 outputs a commodity capture instruction to the camera 405 based on the determination by the determination unit 4010 that the second transaction data satisfies the capture condition. The commodity capture instruction is an instruction (or command) by which the processor 401 controls the camera 405. The processor 401 turns on the camera 405 in response to the commodity capture instruction and controls the camera 405 to automatically image the commodity.

The acquisition unit 4012 acquires the captured image (or data corresponding thereto) from the camera 405 based on the instruction for photographing the commodity output by the first output unit 4011.

The second output unit 4013 outputs the captured image data acquired by the acquisition unit 4012 to the monitoring server 26.

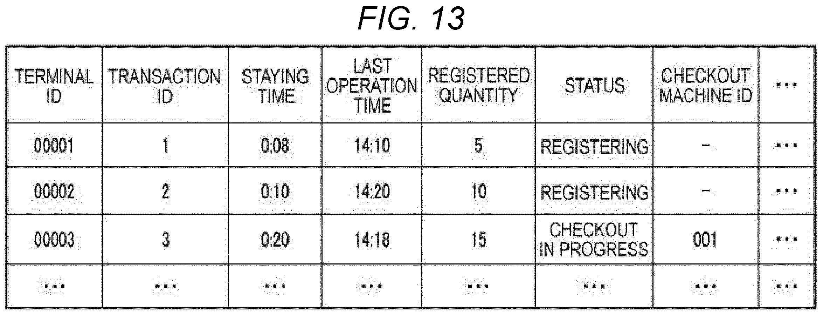

An example of the first index file will be described. FIG. 13 depicts the data structure of the first index file stored in the transaction data storage area 2631 according to the embodiment.

The first index file includes columns for "terminal ID", "transaction ID", "staying time", "last operation time", "registered quantity", "status", and "checkout machine ID". Each of the terminal IDs of an index file record is associated with a transaction ID value, a staying time value, a last operation time, a registered quantity value, a status value, and a checkout machine ID. For example, the smartphone 40 with a terminal ID "00001" is associated with a transaction ID "1". The smartphone 40 with the terminal ID "00001" has a staying time of "8 minutes", which is the elapsed time since login, and the last operation time, which is the last time when the smartphone 40 was operated, is "14:10". The registered quantity is "5", and the status indicates "registering" before the checkout processing has been performed. In this example, the smartphone 40 with the terminal ID "00001" is not associated with a checkout machine because the smartphone 40 is in the state before the checkout processing is performed, and the checkout machine ID is thus blank. The information contained in the first index file can be set or varied as appropriate. The monitoring server 26 updates the first index file as appropriate.

The second index file stored in the transaction data storage area 4032 of the smartphone 40 includes only the index file records related to the particular smartphone 40. For example, the smartphone 40 with the terminal ID "00001" stores only the index file record associated with the terminal ID "00001" in the transaction data storage area 4032.

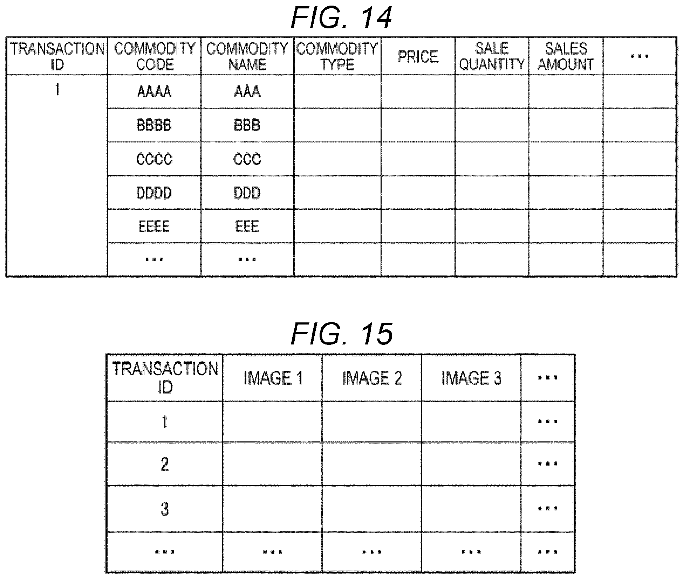

FIG. 14 depicts the data structure of the first transaction file stored in the transaction data storage area 2631 according to the embodiment.

The first transaction file includes columns for "transaction ID", "commodity code", "commodity name", "commodity type", "price", "sale quantity", and "sales amount". Each transaction ID is associated commodity codes, commodity types, commodity names, prices, sale quantities, and the sales amounts as a transaction file record. The first index file and the first transaction file are associated with the "transaction ID" as a key. The information contained in the first transaction file can be set as appropriate. The monitoring server 26 updates the first transaction file as appropriate.

The second transaction file stored in the transaction data storage area 4032 of the smartphone 40 includes only the information related to the particular smartphone 40. For example, the smartphone 40 with the terminal ID "00001" stores only the first transaction file record of the "transaction ID" associated with the terminal ID "00001" in the transaction data storage area 4032.

FIG. 15 is depicts the data structure of the captured image management data stored in the captured image storage area 2632 according to the embodiment.

The captured image management data includes "transaction ID" and "image". The "image" item sets the captured image data. Each of the plurality of transaction IDs is associated with the captured image data as a captured image data record. The monitoring server 26 may store the captured image data in the captured image storage area 2632 in a series based on the time when the captured image data was acquired. The captured image management data is associated with the first index file and the first transaction file by using the "transaction ID" as a key. The monitoring server 26 appropriately updates the captured image management data each time the captured image data is acquired.

### Operation of Monitoring Server

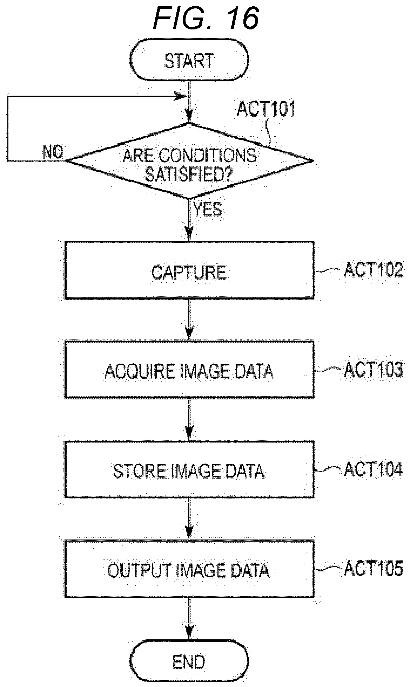

FIG. 16 is a flowchart illustrating an example of the procedure of information processing by the monitoring server 26 according to an embodiment. The processing is only an example, and various aspects may be changed. For example, steps can be omitted, replaced, or added as appropriate.

The following processing is processing performed during shopping. The processing starts before a commodity is registered by the member of the smartphone 40 and continues until checkout processing is started. The member reads the code symbol attached to a commodity displayed in the store using the camera 405 and registers the commodity. The information about the registered commodities is stored in the virtual POS server 13. The information is also stored in the transaction data storage area 2631 of the monitoring server 26 associated with the virtual POS server 13. It is assumed in this example that the smartphone 40 has the terminal ID "00001" in FIG. 13.

As ACT 101, the processor 261 determines whether the transaction data satisfies one of the capture conditions. In this example, the capture condition relates to the total quantity of the commodities registered in the transaction. In the example, a capture condition is triggered for every fifth item registered in the transaction. The processor 261 refers to the index file record associated with the terminal ID "00001" stored in the first index file to compare the "registered quantity" to the established conditions for the commodity. If the processor 261 determines that the "registered quantity" satisfies the capture condition, the processor 261 proceeds to YES in ACT 101. The processor 261 proceeds to ACT 102. If the processor 261 determines that the "registered quantity" does not satisfy the capture conditions, the processor 261 proceeds to NO in ACT 101. The processor 261 repeats the processing of ACT 101. For example, the processor 261 compares the total registered quantity (5) with the capture conditions". Since, in this example, a capture condition concerns the number of items registered in the transaction being a multiple of five, a capture condition is met when the total number of registered items is five. The processor 261 functions as the determination unit 2610 in ACT 101.

In ACT 102, the processor 261 outputs an instruction for photographing the commodity to the smartphone 40 based on the determination result of ACT 101. In one example, the processor 261 outputs a notification instruction with capture guidance to the smartphone 40 when one of the capture conditions is satisfied. The processor 401 controls the touch panel 404 to display the capture guidance in response to the notification instruction. If the notification prompting for photographing the commodity is in voice, the processor 401 of the smartphone 40 controls the voice output device 406 to output the capture guidance by voice in response to the notification instruction. If the notification prompting is in a moving image, the processor 401 of the smartphone 40 controls the voice output device 406 and the touch panel 404 to output the capture guidance in response to the notification instruction.

In another example, the processor 261 outputs an instruction for photographing the commodity to the smartphone 40 if one of the capture conditions is satisfied. The processor 401 turns on the camera 405 in response to this capture instruction, and controls the camera 405 to automatically photograph (image) the commodity. The processor 261 functions as the first output unit 2611 in ACT 102.

In ACT 103, the processor 261 acquires the captured image data for the commodity as captured by the camera 405 . The processor 261 functions as the acquisition unit 2612 in ACT 103.

As ACT 104, the processor 261 stores the acquired captured image data in the captured image storage area 2632. For example, the processor 261 stores the acquired captured image data for the commodity in association with the transaction ID in the captured image storage area 2632 in a time series or the like.

The processor 261 outputs the acquired captured image data to the monitoring terminal 23 in ACT 105. The monitoring terminal 23 generates a monitoring image based on the acquired image data and displays the generated monitoring image on the monitoring terminal 23. The monitoring image includes captured images of one or more commodities associated with transaction data. The processor 261 functions as the second output unit 2613 in ACT 105.

The processor 261 repeats the processing of ACT 101 to ACT 105 each time the first transaction data satisfies any one of the capture conditions during a transaction starting from the login by the member to the end of the checkout processing.

In this way, if the processor 261 repeats the processing of ACT 101 to ACT 105 a plurality of times during one transaction, the monitoring image can include a plurality of captured images in a time series or sequence. In this case, the attendant who confirms the captured image(s) of the commodity on the monitoring terminal 23 can confirm the change in the state of the shopping basket due to the changes in the registered quantity of the commodity along with the increase in the registered quantity.

### Operation of Smartphone

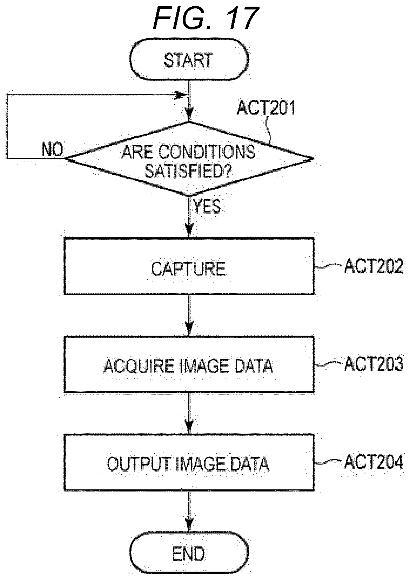

FIG. 17 is a flowchart illustrating an example of the procedure of information processing by the smartphone 40 according to an embodiment. The processing described below is only an example, and processing may be changed, steps can be omitted, replaced, and/or added as appropriate.

The following processing is performed during shopping. The following processing is processing performed by the smartphone 40 in an embodiment in which smartphone 40 itself performs certain information processing instead of the monitoring server 26 described in the above example. The following processing begins before a first commodity is registered by the member of the smartphone 40 and continues until the checkout processing is started. The member reads the code symbol attached to a commodity displayed in the store using the camera 405 and thus registers the commodity as an item to be purchased in the transaction. The information about a registered commodity is stored in the virtual POS server 13 each time a commodity is registered. The information about the registered commodities is also stored in the transaction data storage area 4032 of the smartphone 40. It is assumed smartphone 40 has the terminal ID "00001" in FIG. 13 in this example. The smartphone 40 with the terminal ID "00001" stores only the transaction data generated by itself in the transaction data storage area 4032.

In ACT201, the processor 401 determines whether the transaction data satisfies one of the capture conditions. In this example, a capture condition relates to the total quantity of registered items in the transaction. It is assumed here that every fifth item registered in the transaction triggers a capture condition. For example, the processor 401 refers to the index file record associated with the terminal ID "00001" stored in the second index file to compare the "registered quantity" with the capture conditions. If the processor 401 determines that the "registered quantity" in the second index file satisfies one of the capture conditions, the processor 261 proceeds to YES in ACT 201. The processor 401 proceeds to ACT 202. If the processor 401 determines that the "registered quantity" in the second index file does not satisfy any one of the capture conditions, the processor 401 proceeds to NO in ACT 201. The processor 401 then repeats the processing of ACT 201. In this example, the processor 401 determines that the "registered quantity" of the items registered in the second index file satisfies a capture condition (e.g., the registered quantity value is a multiple of 5), and proceeds to YES in ACT 201. The processor 401 functions as the determination unit 4010 in ACT 201.

The processor 401 outputs an instruction for photographing (capturing an image of) the commodity to the touch panel 404 based on the determination result of ACT 201 as ACT 202. In one example, the processor 401 outputs a notification instruction including capture guidance related to the triggering commodity to the touch panel 404 in response to the "registered quantity" value in the second index file satisfying a capture condition. The notification instruction including the capture guidance is an instruction by which the processor 401 controls the touch panel 404 to display certain capture guidance (e.g., a visual message requesting a photograph of the triggering product or the product(s) in the shopping basket). If the capture guidance is to be provided by voice or sound, the processor 401 outputs a notification instruction to the voice output device 406. In this case, the notification instruction can be an instruction by which the processor 401 controls the voice output device 406 to output the capture guidance by voice or sound. The notification prompting for capture can be provided as a moving image (e.g., video with sound), the processor 401 outputs the notification instruction to both the touch panel 404 and the voice output device 406.

In another example, the processor 401 outputs an instruction (command) for photographing the commodity to the camera 405 in response to the "registered quantity" in the second index file satisfying one of the capture conditions. Here, the instruction is a command or the like by which the processor 401 turns on the camera 405 and controls the camera 405 to automatically capture an image. The processor 401 functions as the first output unit 4011 in ACT 202.

As ACT 203, the processor 401 acquires the captured image (or data corresponding thereto) from the camera 405 based on the instruction for photographing the commodity. The processor 401 functions as the acquisition unit 4012 in ACT 203.

The processor 401 outputs the acquired captured image (or data corresponding thereto) to the monitoring server 26 in ACT 204. The monitoring server 26 then may output the captured image to the monitoring terminal 23. The monitoring terminal 23 generates a monitoring image based on the acquired image data and displays the generated monitoring image on a touch panel display or the like of the monitoring terminal 23). The monitoring image may include various captured images of commodities associated with transaction data. The monitoring image may include a plurality of captured images in a time series or sequence. The processor 401 functions as the second output unit 4013 in ACT 205.

The processor 401 repeats the processing of ACT 201 to ACT 205 each time the second transaction data satisfies at least one of the capture conditions during a transaction. In this way, the processor 401 may repeat the processing of ACT 201 to ACT 205 a plurality of times during the same transaction, and the monitoring image can include a plurality of captured images acquired at different times during the transaction. In this case, the attendant who confirms the captured image(s) of the commodities on the monitoring terminal 23 can confirm the changes in the state of the shopping basket over time due to the changes in the registered quantity of commodities or in conjunction with the meeting of other capture conditions.

### Notification Screen of Capture Guidance

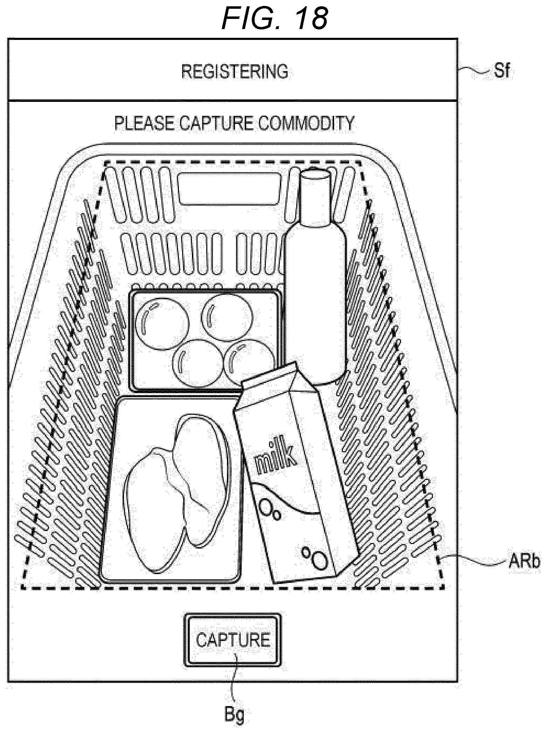

FIG. 18 is a schematic view illustrating an example of a guidance screen Sf displayed on the smartphone 40 according to an embodiment.

The smartphone 40 outputs a notification instruction with capture guidance to the touch panel 404 in response to an instruction for photographing the commodity. FIG. 18 illustrates the guidance screen Sf in which a notification instruction with the capture guidance is displayed. As illustrated in FIG. 18, the guidance screen Sf displays a border ARb indicating a capture area of the commodity. Also, a capture button Bg is displayed. The capture button Bg is a button that the member touches when photographing (imaging) the commodity. The border ARb is set, for example, to fit the entire shopping basket such that the smartphone 40 captures an image of the primary storage area of the shopping basket.

The member operates the smartphone 40 so that the commodity in the shopping basket fits the border ARb, for example. The member touches the capture button Bg while the commodity is inside the border ARb. When the capture button Bg is touched by the member, an image of the picked commodity is captured by the camera 405 of the smartphone 40. According to this example, the smartphone 40 can prompt the member to capture an image of the commodity such that the camera field of view approximately corresponds to the border Arb being at the shopping basket edge. As a result, the smartphone 40 can acquire images having, at least to some extent, a uniform range. Therefore, the variations in the captured images of the commodities are reduced. Thus, the attendant who checks the captured images on the monitoring terminal 23 can more easily compare captured images captured in time sequence.

### Effect of Transaction Processing System

The processor 261 of the present embodiment can determine whether the information on the registration of the commodity satisfies the capture conditions and output an instruction for photographing the commodity based on the determination result to acquire the captured image data of the captured commodity. As a result, the monitoring server 26 can instruct the photographing of the commodity if the registered commodity input by the smartphone 40 satisfies a condition to be monitored. Therefore, the monitoring server 26 can display the image of the commodity to be monitored captured by the smartphone 40 on the monitoring terminal 23. The attendant can quickly and efficiently collate the picked commodities to the registered commodities based on the monitoring image displayed on the monitoring terminal 23. In addition, the monitoring server 26 can alert the customer not to forget to register the commodity or misregister a commodity by instructing the customer to photograph the commodity when the conditions for monitoring are satisfied. The smartphone 40 can also support the attendant in quickly and efficiently comparing picked items to registered items by the functions of the processor 401, similarly to the monitoring server 26.

According to the present embodiment, the processor 261 can determine whether the certain conditions related the registered commodities are satisfied, output an instruction for photographing the commodity based on the determination result, and acquire the captured image of the commodity. As a result, the monitoring server 26 can instruct to photograph (image) the commodity if the quantity, value, or commodity type among the information of the registered commodity input by the smartphone 40 satisfies certain conditions to be monitored. The monitoring server 26 can set the monitoring targets in detail appropriate to the preferences of the member store or the like. Therefore, the attendant can compare the purchased items with the registered items more quickly and efficiently based on the monitoring image displayed on the monitoring terminal 23. Furthermore, the smartphone 40 can support the attendant in quickly and efficiently collating the picked items with the registered items by the functions of the processor 401 operating similarly to the monitoring server 26.

According to the present embodiment, the processor 261 can determine whether certain conditions regarding the commodity registration process itself are satisfied, output an instruction for photographing the commodity based on the determination result, and acquire the captured image of the commodity. As a result, the monitoring server 26 can instruct to photograph a commodity if certain conditions for the commodity registration operation or the time are satisfied. Therefore, the monitoring server 26 can set the monitoring target in detail according to the preferences of the member store or the like.

According to the present embodiment, the processor 261 can output a notification instruction including capture guidance for acquiring the captured image data of a commodity. As a result, the monitoring server 26 can cause the display of the capture guidance on the smartphone 40 if the capture conditions are satisfied and thus prompt the customer to photograph the commodity. Therefore, the customer who owns the smartphone 40 can capture an image of the commodity according to the capture guidance when required.

According to the present embodiment, the processor 261 can output an instruction for photographing the commodity. As a result, the monitoring server 26 can control the smartphone 40 to automatically capture an image of the commodity if certain capture conditions are satisfied. Therefore, the monitoring server 26 does not necessarily require any operation by the customer, and can reliably acquire the image data of the commodity when required.

In an embodiment, the smartphone 40 operated by the customer while on the sales floor may be a tablet terminal attached to a shopping cart. In this case, the tablet terminal can be equipped with a built-in camera or can be connected to an external camera. In some examples, the smartphone 40 operated by the customer while in the store may be lent to the customer by the store for the purpose of shopping, or may be a smartphone owned by the customer.

In an embodiment, the server system 10 is cloud-based. In such a case, the POS system 20 may itself incorporate one or more functions of the server system 10. That is, it is also possible to build the transaction processing system 100 within one store or for just one store.

In an embodiment, the server system 10 includes the database server 11, the management server 12, and the virtual POS server 13. In some examples, the server system 10 may be one server that integrates the functions of the database server 11, the management server 12, and the virtual POS server 13.

Similarly, in the POS system 20 of each store, instead of separating the described functions between the store server 21, the checkout server 22, and the monitoring server 26, one server may integrate the functions of the store server 21, the checkout server 22, and the monitoring server 26.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. An information processing device for product registration and checkout systems, the device comprising:
a communication interface;
a memory unit configured to store one or more capture conditions;
a processor configured to:
check whether a registration of a commodity in a sales transaction satisfies a capture condition stored in the memory unit;
output an instruction for capturing an image of the commodity if the registration satisfies the capture condition;
acquire an image of the commodity that was captured based on the instruction; and
output the acquired image to a first external apparatus via the communication interface.

2. The information processing device according to claim 1, wherein the capture condition is a price of the commodity being greater than a threshold value.

3. The information processing device according to claim 1, wherein the capture condition is whether the commodity is in a pre-selected category of commodities.

4. The information processing device according to claim 1, wherein the capture condition is whether the number of registered commodities is a multiple of a fixed increment sized.

5. The information processing device according to claim 1, wherein the capture condition is whether the total number of registered commodities in the sales transaction exceeds a pre-selected threshold value.

6. The information processing device according to claim 1, wherein the capture condition is whether the total value of registered commodities in the sales transaction exceeds a pre-selected threshold value.

7. The information processing device according to claim 1, wherein the capture condition is a time at which the registration occurred.

8. The information processing device according to any one of claims 1 to 7, further comprising a camera or a touch panel display, to which the processor outputs the instruction for capturing the image of the commodity if the registration satisfies the capture condition.

9. The information processing device according to any one of claims 1 to 7, wherein the processor outputs the instruction for capturing the image of the commodity to a second external apparatus via the communication interface.

10. A non-transitory computer-readable storage unit storing program instructions which when executed cause a computer to perform a method comprising:
checking whether a registration of a commodity in a sales transaction satisfies a capture condition stored in a memory unit;
outputting an instruction for capturing an image of the commodity if the registration satisfies the capture condition;
acquiring an image of the commodity that was captured based on the instruction; and
outputting the acquired image to a first external apparatus via a communication interface.

11. The non-transitory computer-readable storage unit according to claim 10, wherein the capture condition is a price of the commodity being greater than a threshold value.

12. The non-transitory computer-readable storage unit according to claim 10, wherein the capture condition is whether the commodity is in a pre-selected category of commodities.

13. The non-transitory computer-readable storage unit according to claim 10, wherein the capture condition is whether the number of registered commodities is a multiple of a fixed increment sized.

14. The non-transitory computer-readable storage unit according to claim 10, wherein the capture condition is whether the total number of registered commodities in the sales transaction exceeds a pre-selected threshold value.

15. The non-transitory computer-readable storage unit according to claim 10, wherein the capture condition is whether the total value of registered commodities in the sales transaction exceeds a pre-selected threshold value.
